(19) Europäisches Patentamt

European Patent Office

Office européen des brevets

(11) EP 0 762 126 B1

(12) EUROPÄISCHE PATENTSCHRIFT

(45) Veröffentlichungstag und Bekanntmachung des Hinweises auf die Patenterteilung:
17.03.1999 Patentblatt 1999/11

(51) Int Cl.6: G01P 3/36, G01P 5/00

(21) Anmeldenummer: 96113119.0

(22) Anmeldetag: 16.08.1996

(54) **Verfahren und Vorrichtung zur Geschwindigkeitsmessung**

Method and apparatus for measuring speed

Procédé et dispositif de mesure de vitesse

(84) Benannte Vertragsstaaten:
BE DE GB IT NL SE

(30) Priorität: 17.08.1995 DE 19530287

(43) Veröffentlichungstag der Anmeldung:
12.03.1997 Patentblatt 1997/11

(73) Patentinhaber:
• Michel, Klaus
18055 Rostock (DE)
• Christofori, Klaus
D-18069 Rostock (DE)
• Richter, Andreas
18069 Rostock (DE)

(72) Erfinder:
• Michel, Klaus
18055 Rostock (DE)
• Christofori, Klaus
D-18069 Rostock (DE)
• Richter, Andreas
18069 Rostock (DE)

(56) Entgegenhaltungen:
DE-A- 3 229 343          DE-A- 4 128 966
DE-A- 4 342 609          DE-U- 9 013 877
FR-A- 2 408 840

• PATENT ABSTRACTS OF JAPAN vol. 7, no. 220 (P-226) [1365] , 30.September 1983 & JP-A-58 113762 (FUJITSU K. K.), 6.Juli 1983,

**Beschreibung**

Die Erfindung betrifft ein Verfahren zur Bestimmung der Geschwindigkeit eines Objektes oder einer Objektoberfläche als einer charakteristischen Größe vieler industrieller Prozesse relativ zu einem opto-elektronischen Geschwindigkeitsmeßgerät. Es sind eine Reihe von Verfahren bekannt, welche die Filterwirkung gitterförmiger Strukturen ausnutzen, um ein schmalbandiges Signal zu generieren, dessen Maximumsfrequenz im Leistungsdichtespektrum proportional zur gesuchten Objektgeschwindigkeit ist.

In DE 40 09 737 A1 wird ein bildgebend abtastendes Sensorsystem beschrieben, aus dessen Ausgangssignal durch Multiplikation mit Gewichtsfunktionen und anschließende Integration oder Mittelwertbildung über den abgetasteten Bildausschnitt mehrere Auswertesignale erzeugt werden, die ein elektrisches Drehfeld bilden. Mit einer Phasenverschiebung von 90° zwischen den Gewichtsfunktionen wird ein zweiphasiges Drehfeld aufgebaut, mit einer Phasenverschiebung von 120° ein dreiphasiges Drehfeld.

In DE 33 40 924 A1 werden zwei phasen-orthogonale Signale durch entsprechende Zusammenschaltung der Ausgangssignale von mindestens einer aus vier opto-elektrischen Wandlern bestehenden Gruppe generiert. Aus den zwei um eine Viertelperiode verschobenen Signalen wird unter Zuhilfenahme einer logischen Schaltung die Richtung der Bewegung ermittelt. Auf die Geschwindigkeit wird jedoch aus der Frequenz der Signale geschlossen.

In DE 43 13 497 dienen die Signale von Photodetektoren ebenfalls zur Erzeugung von zwei um 90° phasenverschobenen Signalen. Durch Vergleich der Pegelwechsel dieser Signale mit gespeicherten typischen Folgen von Pegelwechseln wird die Bewegungsrichtung detektiert. Der Betrag der Geschwindigkeit kann durch dieses Verfahren nicht aus der Phaseninformation bestimmt werden.

Eine kammförmige Verschachtelung zweier Gitter wird auch in DE 32 29 343 A1 zur Erzeugung von zwei phasenverschobenen Signalen genutzt. Aus der Signalfrequenz wird direkt auf die Geschwindigkeit geschlossen. Die Phasenverschiebung dient wiederum nur zur Erkennung der Richtung der Bewegung.

In JP 63-273064 A werden vier Detektorelementegruppen zu zwei Differenzgittern verschaltet. Aus der zeitlichen Differenz der Nulldurchgänge der beiden Signale wird die Objektgeschwindigkeit ermittelt. Eine Bestimmung des Phasenwinkels wird jedoch nicht nahegelegt.

In DE-OS 24 54 299 wird vorgeschlagen, benachbarte Gitterelemente (mindestens 3) eines optischen Gitters zu Gruppen zusammenzufassen und einerseits die Ausgangssignale aller ersten und andererseits die Ausgangssignale aller zweiten Gitterelemente in Addierschaltungen zu summieren. Der Phasenvergleich der beiden Summensignale ermöglicht eine Erkennung der Bewegungsrichtung, also eine vorzeichenrichtige Geschwindigkeitsmessung. In DE 40 35 039 A1 wird die Verwendung eines CCD-Zeilensensors als gitterartig strukturierter Detektor vorgeschlagen. In den Schieberegistern der CCD-Zeile erfolgt die Integration über die Sensorfläche durch Ladungsakkumulation, die durch Anlegen eines 2-Phasen-Taktes realisiert wird. Eintritte von Strukturelementen in das Sensorsichtfeld führen jedoch ebenso wie deren Wiederaustritte zu Phasensprüngen im Signalverlauf Diese verfälschen das Meßergebnis bzw. machen bei einer großen Anzahl von Strukturelementen und einer Gleichverteilung der Phasenlagen Messungen unmöglich. Bei dem in EP 0 516 301 A2 vorgestellten Geschwindigkeitsmeßgerät auf der Basis von N zu einem einfachen Differenzgitter verschalteten Sensoren wird die Mittenfrequenz des bandpaßgefilterten Ausgangssignals durch Nulldurchgangsdetektion bestimmt. Phasensprünge im Signalverlauf führen auch bei diesem Verfahren zu Verfälschungen des Meßergebnisses.

Zu den optischen Verfahren zur lokalen Geschwindigkeitsmessung gehört auch die Laser-Doppler-Velocimetrie (H.E. Albrecht: Laser-Doppler-Strömungsmessung. Academie-Verlag, Berlin, 1986). Laser-Doppler-Velocimeter, welche nach dem Kreuzstrahlprinzip arbeiten, nutzen ebenfalls die Ortsfilterwirkung gitterförmiger Strukturen (in Form von Interferenzstreifen im als Meßvolumen bezeichneten Schnittpunkt der beiden sich kreuzenden Laserstrahlen) zur Bildung eines Signals mit einer zur gesuchten Geschwindigkeit proportionalen Maximumsfrequenz im Leistungsdichtespektrum. Zur Schätzung dieser Signalfrequenz stehen sich grundsätzlich Auswerteverfahren im Zeitbereich (z. B. Periodendauermessung) und im Frequenzbereich (z. B. Fast-Fourier-Transformation) gegenüber (vgl. C. Tropea: Performance Testing of LDA/PDA Signal Processing Systems. Proc. 3rd Int. Conf. on Laser-Anemometry-Advances and Applications, Swansea/UK, IL 4, 1989 und E.O. Brigham: FFT - schnelle Fourier Transformation. R. Oldenbourg Verlag, München, Wien, 1985).

Alle diese Verfahren bestimmen die mittlere Frequenz in einem Signalausschnitt und benötigen dazu je nach angestrebter Frequenzauflösung und -genauigkeit eine Mindestanzahl von Signalperioden. Der mittelnde Charakter dieser Auswerteverfahren hat bislang auch die Geschwindigkeitsmessung von Partikelclustern oder bewegten Festkörperoberflächen stark beeinträchtigt. Bei einer Vielzahl dieser Anwendungen treten im Signalverlauf Phasensprünge auf die aus der zufälligen Phasenlage der in das Meßvolumen einlaufenden Objekte in Bezug auf das Streifensystem resultieren. Diese Phasensprünge täuschen eine nicht vorhandene Bewegungsdynamik vor und führen so zur Ermittlung falscher Geschwindigkeitswerte.

In DE 41 28 966 A1 wird die Erzeugung paralleler, äquidistanter Streifensysteme im Meßvolumen vorgeschlagen, die (eine physikalische Unterscheidbarkeit dieser Streifensysteme vorausgesetzt) zu phasenverketteten Meßsignalen führt. Als Spezialfall ermöglicht die Realisierung einer $\pi/2$-Phasenverschiebung die Erzeugung eines sin-cos-Signalpaares, dessen Meßinformation in Form eines Drehzeigers vorliegt. Die komplexe Auswertung der Wertepaare ermöglicht die Bestimmung der momentanen Phase. Wird jedoch aus dieser Phaseninformation die Signalfrequenz bestimmt, um daraus die Geschwindigkeit des Partikelclusters abzuleiten, sind Meßfehler die Folge. Dies erklärt sich aus dem Phasenrauschen zwischen zwei Signalbursts. wodurch ein höherfrequenter Signalanteil vorgetäuscht wird. Dadurch ist dieses Verfahren ebenfalls nicht geeignet, den Störeinfluß von Phasensprüngen zu eliminieren.

Aufgabe der vorliegenden Erfindung ist es, durch ein geeignetes Verfahren die Bestimmung der Frequenz vorzunehmen, um daraus die Geschwindigkeitsinformation zu gewinnen, mit dem Ziel die Echtzeitfähigkeit und die zeitliche Auflösung zu erhöhen, sowie die Signalverarbeitung zu vereinfachen und damit den rechentechnischen Aufwand zu reduzieren, um im Ergebnis mit geringer Meßunsicherheit die Geschwindigkeit hochdynamischer Prozesse ermitteln zu können.

Die Aufgabe wird erfindungsgemäß gelöst durch ein Verfahren gemäß Anspruch 1 und eine Vorrichtung gemäß Anspruch 9.

Das Verfahren zur Geschwindigkeitsmessung bedient sich eines oder mehrerer optoelektronischer Detektoren, auf die die Bewegung strukturierter Objekte abgebildet wird. Diese Bildinformation ist einer Bewertung mit gitterartigen Funktionen unterworfen, die eine Hell-Dunkel-Modulation realisieren. Die gesamte Bildinformation wird zusätzlich mit einer beliebigen Fensterfunktion bewertet. Bekanntermaßen stellt ein räumlich begrenzter Detektor stets eine Bewertung mit einem Rechteck-Fenster dar, die das gewünschte Frequenzspektrum des resultierenden Ausgangssignales nachteilig beeinflußt. Die Fensterung kann dabei sowohl bereits im optischen Kanal z.B. durch die Beeinflussung der Lichtstärkeverteilung oder das Einbringen einer optischen Nichtlinearität erfolgen, als auch im Nachhinein durch eine elektronische Bewertung.

Die Bildinformation wird in vier örtlich verschiedenen Teilbereichen verarbeitet, die jeweils die Bewertung mit einer gitterartigen Funktion realisieren. Die Ergebnisse dieser Bewertung werden anschließend über den Ort aufintegriert. Das Verfahren gestattet unterschiedliche Vorgehensweisen bei der Integration. Die Integration kann durch unmittelbare Bildung des Integrals über die gesamte photoempfindliche Fläche der jeweiligen vier Teilbereiche erfolgen. Sie kann weiterhin durch sofortige Verknüpfung und Summation erfolgen oder durch sequentielles Aufsummieren der Teilintegrale über die photoempfindlichen Elementarflächen der vier Teilbereiche realisiert werden. Die vier Teilbereiche sind derart ineinander verschachtelt, daß die jeweils zwei ein Paar bildenden Teilbereiche zueinander eine örtliche Phasenverschiebung von 90° (nachfolgend als Phasen-Orthogonalität bezeichnet) besitzen. Die beiden Paare haben zueinander einen definierten und prinzipiell frei wählbaren örtlichen Abstand, der einer Phasenverschiebung von vorzugsweise kleiner 90° entspricht.

Die Bewertung mit gitterartigen Strukturen führt bekanntermaßen am Detektorausgang zu einem schmalbandigen Signal mit einer Mittenfrequenz, die proportional der Geschwindigkeit ist. Jeder der vier Teilbereiche generiert auf diese Weise ein eigenes schmalbandiges Signal. In einem Zeitpunkt liegen somit zwei Signalpaare, d.h. vier Signale (der vier Teilbereiche) vor. Die Signale jedes Signalpaares werden in einer sich anschließenden komplexen Berechnung jeweils als Realbzw. Imaginärteil einer komplexen Größe aufgefaßt und ergeben jeweils einen Drehzeiger. Somit liegen in jedem Abtastzeitpunkt zwei Drehzeiger (ein Drehzeigerpaar) vor. Zwischen den Drehzeigern eines Signalpaares wird in aufeinanderfolgenden Abtastzeitpunkten der Phasenwinkel berechnet, der ein Maß für die gesuchte Objektgeschwindigkeit darstellt. Die Phaseninformation ist in vielen Fällen jedoch mit Phasensprüngen behaftet, so daß das vorliegende Verfahren eine weitergehende Signalverabeitung vorsieht.

Das Verfahren nutzt im Gegensatz zur bekannten einfachen Drehzeigerverarbeitung ein Drehzeigerpaar. Für jeden (Abtast-) Zeitpunkt wird zusätzlich zu den bereits berechneten Phasenwinkeln eines Signalpaares in aufeinanderfolgenden Abtastzeitpunkten der Phasenwinkel zwischen den beiden Zeigern des Drehzeigerpaares (und somit zwischen den Signalpaaren) berechnet. Dieser Phasenwinkel ergibt sich aus dem definierten Abstand zwischen den beiden Bereichspaaren, der damit Bezugsgröße für die in die komplexe Rechenvorschrift integrierte anschließende Berechnung eines korrigierten Phasenwinkels ist. Diese Korrektur dient der Eliminierung der Phasensprünge und somit der Minimierung des Meßfehlers. Abschließend wird die Objektgeschwindigkeit aus dem korrigierten Phasenwinkel ermittelt.

Weiterbildungen, Einzelheiten und vorteilhafte Ausgestaltungen der Vorrichtung ergeben sich aus den Ansprüchen 10 bis 19, der weiteren Beschreibung und der Zeichnung, welche die Ausführungsbeispiele veranschaulicht. Die Zeichnung zeigt in

| | |
|---|---|
| Fig. 1 | ein Blockschaltbild des optischen Sensors, |
| Fig. 2 | eine schematische Darstellung der Signalverarbeitung eines Sensors mit einer CCD-Zeile, |
| Fig. 3 | ein Blockschaltbild der Signalverarbeitung eines Sensors mit einer CCD-Zeile, |
| Fig. 4 | ein Blockschaltbild der Signalverarbeitung eines Sensors mit einem Laser-Doppler-Velocimeter, und in |
| Fig. 5 | ein Blockschaltbild der Signalverarbeitung eines Sensors mit einer Struktur photoempfindlicher Empfänger. |

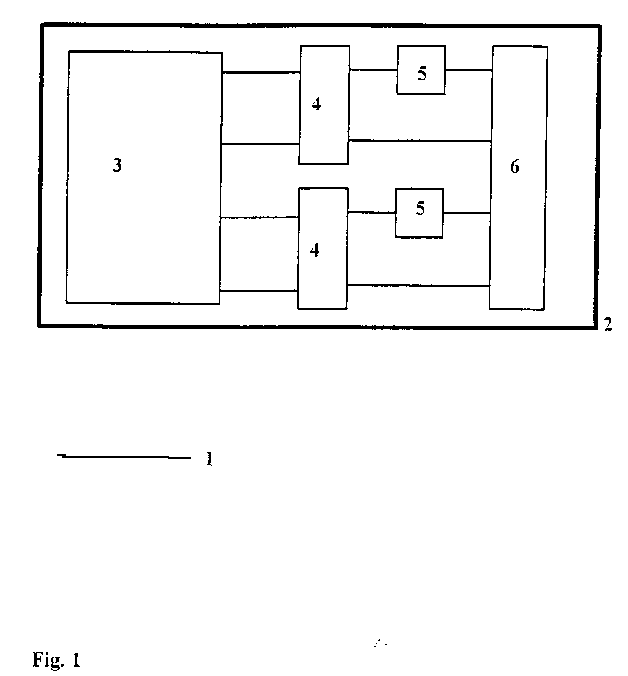

Es wird von einem optischen Sensor **2** ausgegangen, der aus einem Bewertungsmodul **3**, zwei Drehzeigerfunktionsmodulen **4**, zwei Phasendifferenzmodulen **5** und einem Geschwindigkeitsmodul **6** besteht (**Fig. 1**). Diese grundsätzliche Anordnung beinhaltet unterschiedliche Realisierungsvarianten insbesondere in der Ausführung des Bewertungsmoduls.

Besonders vorteilhaft wird im ersten Ausführungsbeispiel eine CCD-Zeile als opto-elektronisches Empfängerarray eingesetzt. Die gitterartig ausgebildete Struktur dieses Empfängers ermöglicht, Übereinstimmung der Orientierung des Sensors mit der Bewegungsachse vorausgesetzt, die eindimensionale Messung der Geschwindigkeit von Objekten relativ zum Empfänger. Zur Generierung von zwei phasen-orthogonalen Signalpaaren wird die Sensorgeometrie in Verbindung mit einer geeigneten Betaktung und Signalzusammenfassung ausgenutzt, wobei unter Sensorgeometrie die Geometrie der photoempfindlichen Flächen der CCD-Zeile verstanden werden soll. Die erforderliche Integration über die photoempfindlichen Flächen erfolgt durch Ladungsakkumulation.

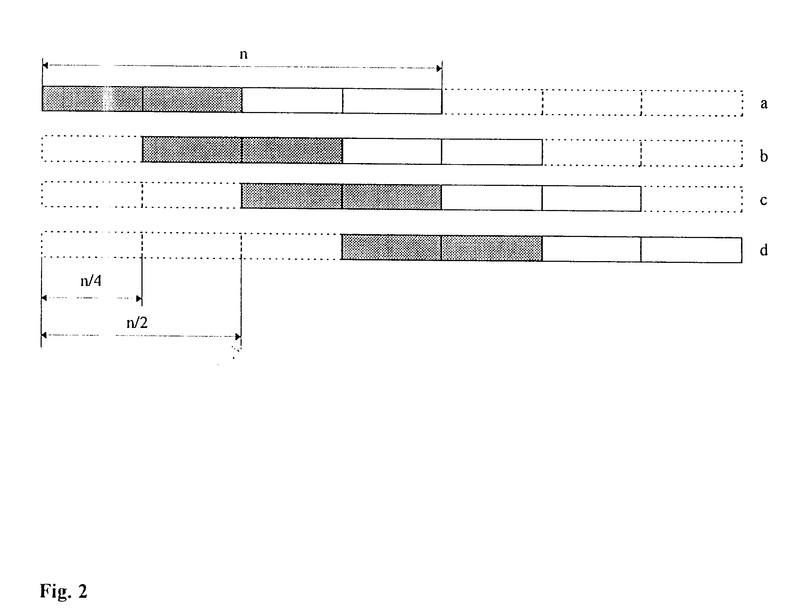

Vier örtlich unterscheidbaren Teilbereichen entsprechend werden jeweils n Werte des durch Abtastung separierten und mit einem Tiefpaß gefilterten Ausgangssignals der CCD-Zeile (Sensorsignal) bei der Signalbildung zusammengefaßt. Dazu ist eine vorherige Speicherung dieser Werte in einer Speicherstruktur je Signalkanal erforderlich. Eine weitere Variante ist die Verwendung einer von den vier Signalen gemeinsam genutzten und entsprechend adressierbaren Speicherstruktur. Die Signalbildung ist in **Fig. 2** schematisch dargestellt.

In einer für die beiden phasen-orthogonalen Signalpaare identischen Operation werden anschließend die Wertepaare $(a_m, c_m)$ und $(b_m, d_m)$ als aus je einem Real-und einem Imaginäranteil bestehend aufgefaßt. Damit ergeben sich die beiden vom Verfahren benötigten und durch Betrag und Phasenwinkel gekennzeichneten Drehzeiger. Zu jedem Abtastzeitpunkt wird gleichermaßen und für jeden der nunmehr zwei Signalkanäle identisch die Phasendifferenz $\Delta\phi$ zwischen dem aktuellen Drehzeiger und dem Drehzeiger zum vergangenen Abtastzeitpunkt gebildet. Weiterhin werden auf geeignete Weise die Phasenwinkel $\Delta\alpha$ zwischen den Drehzeigern der beiden Kanäle im Abtastzeitpunkt $(\Delta\alpha_m)$ und zu einem vorhergehenden Abtastzeitpunkt $(\Delta\alpha_{m-1})$ bestimmt. Aus diesen vier Phasendifferenzen wird ein korrigierter Phasenwert ermittelt. Dieser Wert wird zur Geschwindigkeitsbestimmung verwendet.

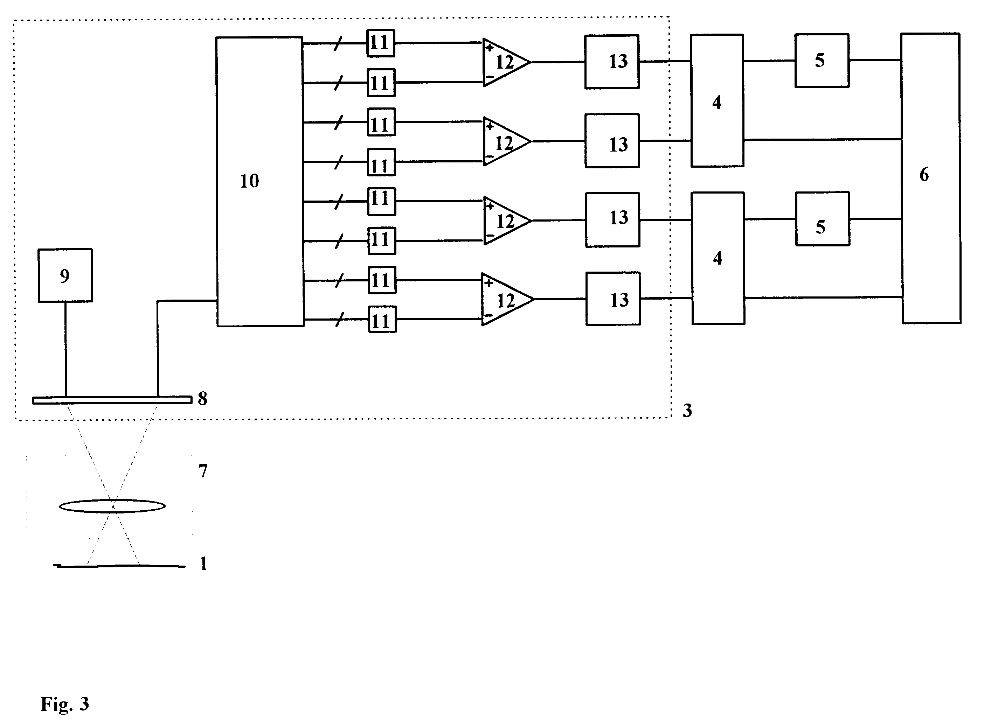

**Fig. 3** zeigt das Ausführungsbeispiel eines Sensors mit CCD-Zeile als Empfängerarray. Die Struktur eines bewegten Objektes **1** wird unter Zuhilfenahme einer Optik **7** auf ein als CCD-Zeile **8** ausgeführtes Empfängerarray abgebildet. Ein Taktgenerator **9** realisiert die Betaktung. Die Werte des Ausgangssignals der Zeile werden zunächst im benötigten Umfang, der sich aus der Zusammenfassung von jeweils n dieser Werte zu einem Signalwert ergibt, in einem adressierbaren Speicher **10** zwischengespeichert. Die Summen von jeweils n/2 Werten werden mittels Summierern **11** gebildet und einer Differenzverstärkung **12** zugeführt.

Die vier in der oben beschriebenen Weise aus dem Sensorsignal gewonnenen Signale werden jeweils einer Filterung mit einem Tiefpaß **13** höherer Ordnung unterworfen. Diese Maßnahme dient der Eliminierung von Störfrequenzen. Anschließend werden die beiden Paare zueinander phasen-orthogonaler Signale jeweils einem Drehzeigerfunktionsmodul **4** zur Drehzeigerbildung übergeben. Je ein Phasendifferenzmodul **5** pro Kanal realisiert im Anschluß die Berechnung der Phasendifferenz zwischen den Drehzeigern im aktuellen und im vorhergehenden Abtastzeitpunkt, einschließlich der dazu erforderlichen Zwischenspeicherung des Drehzeigers im vorhergehenden Abtastzeitpunkt. Ein Geschwindigkeitsmodul **6** ermittelt abschließend für jeden Abtastzeitpunkt aus diesen beiden Phasendifferenzen und den von dieser Funktionseinheit aus den Drehzeigern beider Kanäle für den aktuellen und vorhergehenden Abtastzeitpunkt ermittelten Phasendifferenzen den korrigierten Phasen- und Geschwindigkeitswert entsprechend obiger Beschreibung.

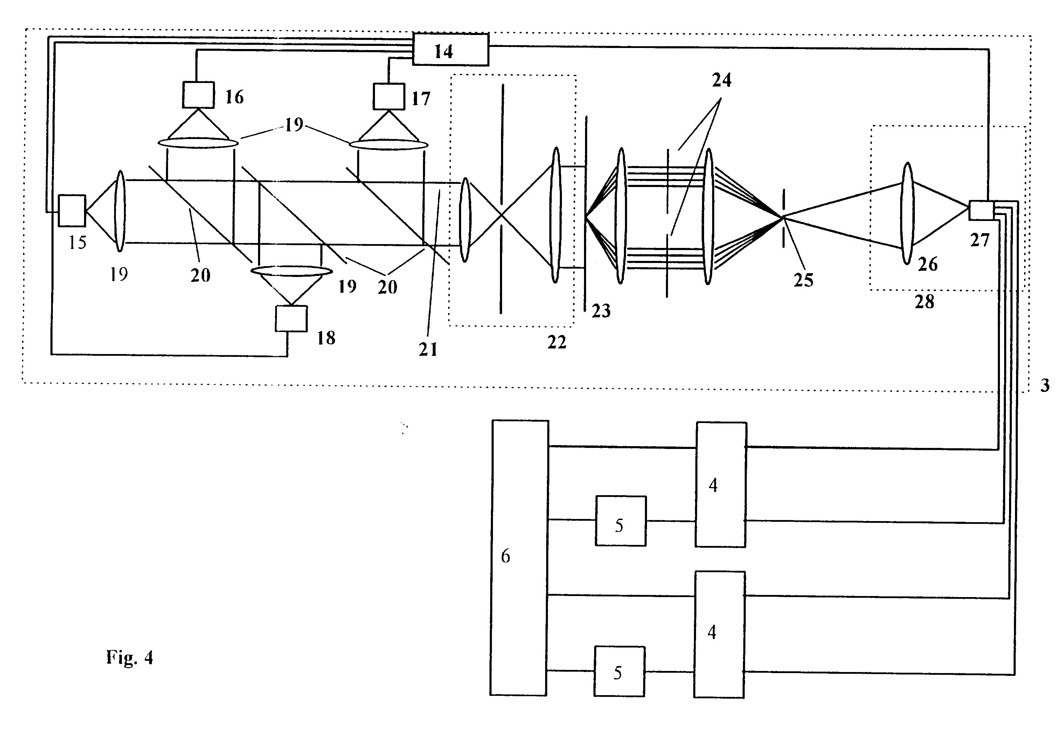

**Fig. 4** zeigt als weiteres Ausführungsbeispiel ein Laser-Doppler-Velocimeter. Die vorzeichenrichtige Bestimmung der Geschwindigkeit basiert hierbei auf der Erzeugung von zwei Meßsignalpaaren durch Detektion von Streulicht aus zwei Paaren unterscheidbarer Streifensysteme.

Die vier örtlich unterschiedlichen Teilbereiche entsprechen in diesem Ausführungsbeispiel zwei Paaren paralleler, äquidistanter Interferenzstreifenmuster mit intern jeweils $\pi/2$-Phasenverschiebung. Die beiden Paare besitzen zueinander ebenfalls eine definierte örtliche Phasenverschiebung, welche vorzugsweise kleiner $\pi/2$ ist. Die phasenverketteten Meßsignale der beiden Paare liefern zwei durch Betrag und Phase gekennzeichnete Zeiger. Zu jedem Abtastzeitpunkt wird anschließend, für jeden der nunmehr zwei Signalkanäle identisch, der Phasenwinkel $\Delta\phi$ zwischen dem aktuellen Drehzeiger und dem Drehzeiger zum vergangenen Abtastzeitpunkt gebildet. Weiterhin werden auf geeignete Weise die Phasenwinkel $\Delta\alpha$ zwischen den Drehzeigern der beiden Kanäle im Abtastzeitpunkt $(\Delta\alpha_m)$ und zu einem vorhergehenden Abtastzeitpunkt $(\Delta\alpha_{m-1})$ bestimmt. Aus diesen vier Phasendifferenzen wird ein korrigierter Phasenwert gebildet, der zur exakten Bestimmung der Bewegungskomponente dient.

Die Strahlen von vier mittels einer Ansteuereinheit **14** gepulsten Strahlungsquellen **15-18** werden durch Strahlformungsoptiken **19** kollimiert, über Einkoppelmodule **20** fluchtend zu einem Strahlenbündel **21** vereinigt, welches einer Strahlaufweitung durch ein Optikmodul **22** unterworfen wird. Über ein holografisches Gitter **23** werden die jeweiligen Teilstrahlen erzeugt, die nach Realisierung der benötigten Phasenverschiebung durch Phasenmodule **24** im Meßort **25** zusammentreffen.

Auf diese Weise werden die zwei Interferenzmusterpaare erzeugt. Die resultierenden Streulichtverteilungen werden über eine Sammeloptik **26** auf eine Empfangseinheit **27** abgebildet. Bei jeweils zwei Interferenzmustern handelt es sich um die gewünschten intensitätsmodulierten Signale mit einer Phasenbeziehung von π/2. Jeweils ein Drehzeigerfünktionsmodul **4** übernimmt anschließend die Verarbeitung eines aus einem Streifensystem resultierenden Signalpaares zu einem Drehzeiger, der einem nachfolgenden Phasendifferenzmodul **5** sowie dem Geschwindigkeitsmodul **6** übergeben wird. Das Phasendifferenzmodul **5** bestimmt aus dem Drehzeiger im vorhergehenden Abtastzeitpunkt und im aktuellen Abtastzeitpunkt die Phasendifferenz. Im Geschwindigkeitsmodul **6** wird abschließend aus beiden Phasendifferenzen und den ebenfalls vom Geschwindigkeitsmodul ermittelten Phasendifferenzen der Drehzeiger beider Kanäle für den aktuellen und den vorhergehenden Abtastzeitpunkt die korrigierte Phase und die Objektgeschwindigkeit berechnet.

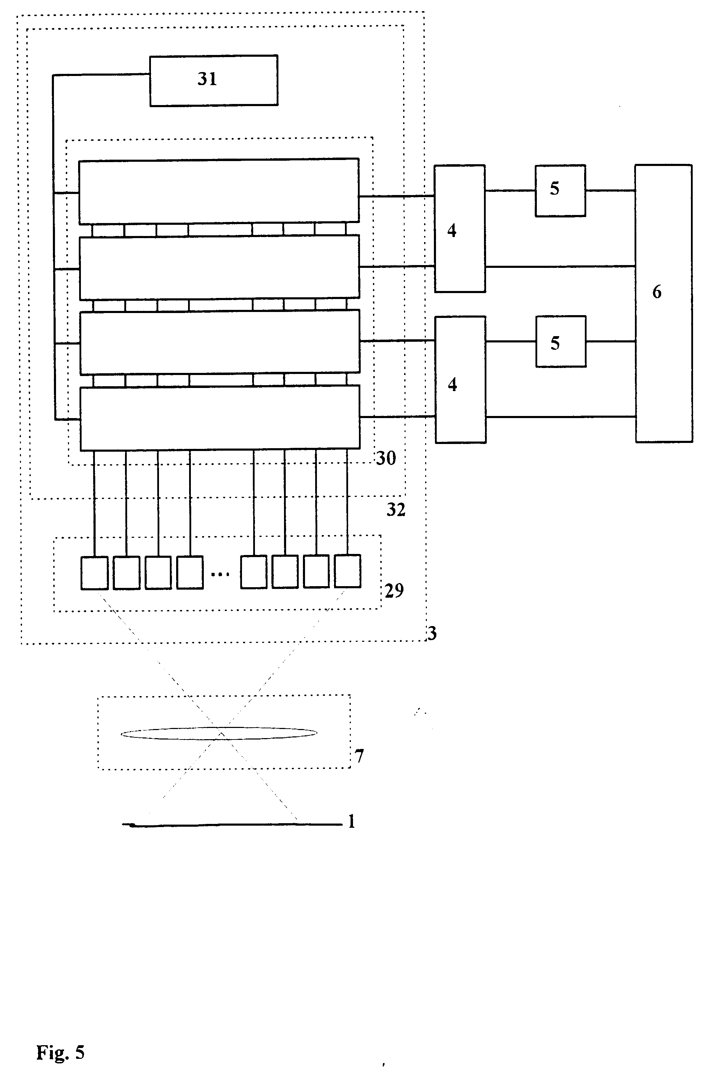

Ein weiteres, in **Fig. 5** dargestelltes Ausführungsbeispiel nutzt eine Struktur photoempfindlicher Empfänger als Empfängerarray.

Für die Realisierung des Ortsfilterprinzips wird ein gitterartig ausgebildetes Empfängerarray **29** (z.B. von Photodioden oder Phototransistoren) verwendet. Während für Photodioden- oder Phototransistorenzeilen mit sequentiellen Ausleseschaltungen die Signalauswertung vom in **Fig. 3** dargestellten Ausführungsbeispiel zu verwenden ist, wird in diesem Ausführungsbeispiel davon ausgegangen, daß auf die dem Lichteinfall proportionalen Ausgangssignale der einzelnen Photoempfänger nach deren Auslesen und Zwischenspeicherung (Pufferung) in einer aus einem Speicher **30** und einer weiteren Funktionseinheit **31** bestehenden Speichereinheit **32** direkt zugegriffen werden kann. Die Sensorsignale bilden in einem Abtastzeitpunkt t den Vektor $S^t$ der Dimension (L, 1) mit L als Anzahl verwendeter Photoempfänger. Die Ausgangssignale können zu den vom Verfahren benötigten örtlich verschiedenen Teilbereichen kombiniert werden. Vor der Verknüpfung können sie mit Fensterfunktionen gewichtet werden.

Die Verknüpfung der Ausgangssignale einzelner Empfänger wird durch die Funktionseinheit **31** realisiert, welche die Bildungsvorschriften für die vier örtlich verschiedenen Teilbereiche umsetzt. Der Signalbildungsvorgang kann als Matrixoperation beschrieben werden. Eine die Bildungsvorschrift verkörpernde Matrix B hat dabei die Dimension (4,L). Für die Bildung des die vier Signalwerte zum Abtastzeitpunkt t enthaltenden Vektors $O^t_{(4,1)}$ gilt damit folgender Zusammenhang:

$$O^t_{(4,1)} = B_{(4,L)} \cdot S^t_{(L,1)}$$

Anschließend werden die beiden phasen-orthogonalen Signalpaare jeweils einem Drehzeigerfunktionsmodul **4** zur Drehzeigerbildung übergeben. Je ein Phasendifferenzmodul **5** pro Kanal realisiert im Anschluß die Berechnung der Phasendifferenz zwischen den Drehzeigern im aktuellen und im vorhergehenden Abtastzeitpunkt, einschließlich der dazu erforderlichen Zwischenspeicherung des Drehzeigers im vorhergehenden Abtastzeitpunkt. Ein Geschwindigkeitsmodul **6** ermittelt abschließend für jeden Abtastzeitpunkt aus diesen beiden Phasendifferenzen und den von dieser Funktionseinheit aus den Phasenwinkeln der Drehzeiger beider Kanäle für den aktuellen und vorhergehenden Abtastzeitpunkt ermittelten Phasendifferenzen den korrigierten Phasen- und Geschwindigkeitswert.

## Patentansprüche

1. Verfahren zur Geschwindigkeitsmessung bewegter Objekte oder Objektoberflächen unter Ausnutzung der Filterwirkung optischer Gitter und der Nutzung optoelektronischer Detektoren zur Umwandlung der Lichtenergie in elektrische Energie in Form von Strom oder Spannung, wobei sich Signalformung, Frequenzmessung und Geschwindigkeitsbestimmung sowie Phasenvergleich zur Erkennung der Bewegungsrichtung anschließen, mit Gitterstrukturen in Form strukturierter Beleuchtung im Sendestrahlengang, in Form von Interferenzgittern am Meßort oder im Empfangsstrahlengang, oder in Form von Transmissionsgittern oder gitterartig strukturierten Empfängern, *dadurch gekennzeichnet*, daß die Bildinformation der Objekte oder der Objektoberfläche verarbeitet wird, indem eine örtlich begrenzte Gitterstruktur eine Bewertung vornimmt, wobei die Gitteramplitude in Form einer Einhüllenden derart vorgegeben wird, daß sie symmetrisch zu den Rändern des Gitters abfällt, wobei die Bildinformation in mindestens vier örtlich verschiedenen Teilbereichen verarbeitet wird, und wobei jeweils zwei Teilbereiche ein Paar bilden und diese Paare zueinander eine definierte und frei wählbare örtliche Phasenverschiebung von vorzugsweise kleiner 90° besitzen und die Teilbereiche jedes Paares zueinander eine örtliche Phasenverschiebung von 90° aufweisen, daß durch Integration über den Ort zwei Paare zueinander phasen-orthogonaler Ausgangssignale gebildet werden, die bei Interpretation der Signale jeweils eines Signalpaares als Real-bzw. Imaginärteil einer komplexen Größe ein Drehzeigerpaar ergeben, daß sowohl die Phasenwinkel zwischen den Drehzeigern jeweils eines Signalpaares in aufeinanderfolgenden Abtastzeitpunkten als auch die Phasenwinkel zwischen den aktuellen und den zu einem vorhergehenden Abtastzeitpunkt gebildeten Drehzeigern beider Signalpaare berechnet werden, und daß unter Verwendung dieser vier berechneten Phasenwinkel ein korrigierter Phasenwinkel und somit eine Objektgeschwindigkeit bestimmt wird.

2. Verfahren nach Anspruch 1 mit homogener Beleuchtung, *dadurch gekennzeichnet*, daß die Einhüllende der Gitteramplitude eine Fensterfunktion darstellt, die durch die Lichtstärkeverteilung der Beleuchtung und/oder eine elektronische Bewertung an einem Detektor und/oder die Einbringung einer optischen Nichtlinearität im Strahlengang der Beleuchtung bestimmt wird.

3. Verfahren nach Anspruch 1, *dadurch gekennzeichnet*, daß die Ergebnisse der Bewertung über die Fläche der Gitterstruktur aufintegriert werden, wobei die Integration durch unmittelbare Bildung des Integrals über die gesamte Sensorfläche der vier Teilbereiche eines Detektors oder durch sofortige Verknüpfung und Summation von Teilintegralen über Elementarflächen der vier Teilbereiche oder durch sequentielles Aufsummieren der Teilintegrale über Elementarflächen der vier Teilbereiche erfolgt.

4. Verfahren nach Anspruch 1, *dadurch gekennzeichnet*, daß die vier Teilbereiche derart ineinander verschachtelt sind, daß jeweils zwei Teilbereiche zueinander eine örtliche Phasenverschiebung von 90° besitzen

5. Vorrichtung zur Geschwindigkeitsmessung bewegter Objekte oder Objektoberflächen zur Durchführung des Verfahrens nach Anspruch 1, mit einem oder mehreren Gittern im Strahlengang eines optischen Sensors (2), optischen Komponenten zur Strahlformung, sowie einem oder mehreren Empfängern und nachgeschalteten Tiefpaßfiltern, *dadurch gekennzeichnet*, daß der optische Sensor (2) aus einem Bewertungsmodul (3), zwei Drehzeigerfunktionsmodulen (4), zwei Phasendifferenzmodulen (5) und einem Geschwindigkeitsmodul (6) besteht, wobei

- im Bewertungsmodul (3) die Bildinformation der Objekte oder der Objektoberfläche verarbeitet wird, indem eine örtlich begrenzte Gitterstruktur eine Bewertung vornimmt, wobei die Gitteramplitude in Form einer Einhüllenden derart vorgegeben wird, daß sie symmetrisch zu den Rändern des Gitters abfällt, wobei die Bildinformation in mindestens vier örtlich verschiedenen Teilbereichen verarbeitet wird, und wobei jeweils zwei Teilbereiche ein Paar bilden und diese Paare zueinander eine definierte und frei wählbare örtliche Phasenverschiebung von vorzugsweise kleiner 90° besitzen und die Teilbereiche jedes Paares zueinander eine örtliche Phasenverschiebung von 90° aufweisen, und wobei durch Integration über den Ort zwei Paare zueinander phasen-orthogonaler Ausgangssignale gebildet werden,

- in den Drehzeigerfunktionsmodulen (4) die Signale jeweils eines Ausgangssignalpaares als Real- bzw. Imaginärteil einer komplexen Größe interpretiert und zwei Drehzeigerpaare gebildet werden,

- und die Ausgänge der Drehzeigerfunktionsmodule (4) jeweils einmal direkt und einmal über ein Phasendifferenzmodul (5) zur Berechnung von Phasenwinkeln zwischen den Drehzeigern auf das Geschwindigkeitsmodul (6) zur Berechnung eines korrigierten Phasenwinkels und somit der Objektgeschwindigkeit geführt sind.

6. Vorrichtung nach Anspruch 5 mit einem Gitter im Strahlengang, *dadurch gekennzeichnet*, daß das Bewertungsmodul (3) ein einziges Gitter und eine Empfangseinrichtung enthält, wobei das Gitter aus vier örtlich begrenzten Teilbereichen zusammengesetzt ist und die Empfangseinrichtung über vier Ausgänge verfügt, die jeweils paarweise auf eines der Drehzeigerfunktionsmodule (4) geführt sind.

7. Vorrichtung nach Anspruch 5 mit mehreren Gittern im Strahlengang, *dadurch gekennzeichnet*, daß das Bewertungsmodul (3) mehrere Gitter und eine Empfangseinrichtung enthält, wobei mindestens vier Gitter zu vier örtlich begrenzten Teilbereichen angeordnet sind und jeweils zwei Teilbereiche zueinander eine örtliche Phasenverschiebung von 90° besitzen und die Empfangseinrichtung über vier Ausgänge verfügt, die jeweils paarweise auf eines der Drehzeigerfunktionsmodule (4) geführt sind.

8. Vorrichtung nach Anspruch 5 und 6, *dadurch gekennzeichnet*, daß das Bewertungsmodul (3) eine Kombination aus Gitter und Empfangseinrichtung enthält, die aus einem Empfängerarray (29) und einer Speichereinheit (32) besteht, wobei dem Empfängerarray (29) eine abbildende Optik (7) vorgeschaltet ist, und die Speichereinheit eine Bildungsmatrix enthält, nach der die Elemente des Empfängerarrays (29) den vier Teilbereichen zugeordnet sind, derart, daß jeweils zwei Teilbereiche zueinander eine örtliche Phasenverschiebung von 90° besitzen und die Signalleitungen der zu einem Teilbereich gehörenden Elemente über einen Summierer zu jeweils einem der vier Ausgänge des Bewertungsmoduls (3) geführt sind.

9. Vorrichtung nach Anspruch 8, *dadurch gekennzeichnet*, daß das Empfängerarray (29) als Photodiodenzeile oder Phototransistorzeile ausgebildet ist.

10. Vorrichtung nach Anspruch 8 und 9, *dadurch ge-*

*kennzeichnet*, daß die Speichereinheit (32) aus einem Speicher (30) mit einer der Anzahl der Zeilenelemente entsprechenden Zahl von Eingängen und einer Funktionseinheit (31) zur Umsetzung der Bildungsmatrix besteht.

11. Vorrichtung nach Anspruch 8, *dadurch gekennzeichnet*, daß das Empfängerarray als CCD-Zeile (8) ausgebildet ist, mit einem photoempfindlichen Teil für die Aufnahme der Bildinformation und einem oder mehreren Schieberegistern zur Ladungsspeicherung, wobei während eines Auslesezyklusses eine mehrmalige elektrische Verbindung einer Schieberegisterzelle mit den Elementen des photoempfindlichen Teils besteht.

12. Vorrichtung nach Anspruch 8 und 11, *dadurch gekennzeichnet*, daß die Speichereinheit aus einem mit dem Ausgang der CCD-Zeile (8) verbundenen adressierbaren Speicher (10) besteht, der über acht mehrkanälige Ausgänge verfügt, denen jeweils Summierer (11) zur Integration über eine der Teilbereichshälften nachgeordnet sind, deren Ausgänge paarweise auf vier Differenzverstärker (12) geführt sind, denen jeweils ein Tiefpaß (13) höherer Ordnung nachgeschaltet ist, so daß die vier Ausgänge der Tiefpässe (13) den Ausgängen des Bewertungsmoduls (3) entsprechen.

13. Vorrichtung nach Anspruch 5 und 7, *dadurch gekennzeichnet*, daß das Bewertungsmodul vier Strahlungsquellen (15, 16, 17, 18) besitzt, denen jeweils eine Strahlformungsoptik (19) nachgeordnet ist, im Strahlengang einer der vier Strahlungsquellen Einkoppelmodule (20) derart angeordnet sind, daß die vier Einzelstrahlen geometrisch zu einem Strahlenbündel (21) zusammengefaßt werden, im Strahlengang des Strahlenbündels ein Optikmodul (22) zur Strahlaufweitung angeordnet ist, wobei dem Optikmodul ein holografisches Gitter (23) nachgeordnet ist, gefolgt von einem Phasenmodul (24), welches aus den Strahlpaaren, die jeweils am Meßort (25) zum Schnitt kommen, zwei unabhängige Interferenzmusterpaare bildet, und einem Empfangsmodul (28), bestehend aus Sammeloptik (26) und Empfangseinheit (27), und wobei eine Ansteuereinheit (14) mit den vier Strahlungsquellen (15, 16, 17, 18) und der Empfangseinheit (27) elektrisch verbunden ist.

## Claims

1. Method for measuring the speed of moving objects or object surfaces utilising the filter effect of optical gratings and the use of opto-electronic detectors for the conversion of light energy into electrical energy in the form of current or voltage, whereby signal formation, frequency measurement and speed determination as well as phase comparison for detection of the direction of movement follow, with grating structures in the form of structured illumination in the transmission beam path, in the form of interference gratings at the measurement location or in the receiver beam path, or in the form of transmission gratings or receivers structured like gratings, characterised in that the image information of the objects or object surfaces is processed by a locally defined grating structure performing an evaluation, whereby the grating amplitude is already given in the form of an envelope in such a manner that it drops symmetrically to the edges of the grating, whereby the image information is processed in at least four locally different sub-regions, and whereby two respective sub-regions form one pair and these pairs have a defined and freely selectable, local phase shift relative to one another of preferably less than 90°, and the sub-regions of each pair have a local phase shift of 90° relative to one another; that by integration over the location two pairs of output signals phase-orthogonal to one another are formed which, upon interpretation of the signals of one respective signal pair as real or imaginary part of a complex magnitude, result in a rotary pointer pair; that both the phase angle between the rotary pointers of a respective signal pair in consecutive scanning time points and the phase angle between the current rotary pointers and the rotary pointers formed at a preceding scanning time point of both signal pairs are calculated; and that using these four calculated phase angles, a corrected phase angle and thus an object speed are determined.

2. Method according to Claim 1 with homogeneous illumination, characterised in that the envelope of the grating amplitude represents a window function which is determined by the distribution of light intensity of the illumination and/or an electronic evaluation at a detector and/or introduction of an optical non-linearity in the beam path of the illumination.

3. Method according to Claim 1, characterised in that the results of the evaluation are integrated over the area of the grating structure, whereby the integration is achieved by direct formation of the integral over the entire sensor area of the four sub-regions of a detector or by immediate linkage and summation of part-integrals over elementary areas of the four sub-regions or by sequential summation of the part-integrals over elementary areas of the four sub-regions.

4. Method according to Claim 1, characterised in that the four sub-regions are interleaved in such a way that two respective sub-regions have a local phase shift of 90° relative to one another.

5. Device for measuring the speed of moving objects or object surfaces for carrying out the method according to Claim 1, with one or more gratings in the beam path of an optical sensor (2), optical components for beam formation, and one or more receivers and lowpass filters connected downline, characterised in that the optical sensor (2) comprises an evaluation module (3), two rotary pointer function modules (4), two phase difference modules (5) and a speed module (6), whereby

- in the evaluation module (3) the image information of the objects or object surfaces is processed by a locally defined grating structure performing an evaluation, whereby the grating amplitude is already given in the form of an envelope in such a manner that it drops symmetrically to the edges of the grating, whereby the image information is processed in at least four locally different sub-regions, and whereby two respective sub-regions form one pair and these pairs have a defined and freely selectable, local phase shift relative to one another of preferably less than 90°, and the sub-regions of each pair have a local phase shift of 90° relative to one another, and whereby by integration over the location two pairs of output signals phase-orthogonal to one another are formed;
- in the rotary pointer function modules (4), the signals of one respective output signal pair are interpreted as real or imaginary part of a complex magnitude and two rotary pointer pairs are formed;
- and the outputs of the rotary pointer function modules (4) are respectively connected, once directly and once via a phase difference module (5) for the calculation of phase angles between the rotary pointers of a respective signal pair in consecutive scanning time points and the phase angle between the current rotary pointers, across the speed module (6) for the calculation of a corrected phase angle and thus the object speed.

6. Device according to Claim 5 with a grating in the beam path, characterised in that the evaluation module (3) contains a single grating and a receiver means, whereby the grating is composed of four locally defined sub-regions and the receiver means has four outputs, which are respectively connected in pairs across one of the rotary pointer function modules (4).

7. Device according to Claim 5 with several gratings in the beam path, characterised in that the evaluation module (3) contains several gratings and a receiver means, whereby at least four gratings are disposed to four locally defined sub-regions and two respective sub-regions have a local phase shift of 90° relative to one another, and the receiver means has four outputs, which are respectively connected in pairs across one of the rotary pointer function modules (4).

8. Device according to Claim 5 and 6, characterised in that the evaluation module (3) contains a combination of grating and receiver means, which comprises a receiver array (29) and a storage unit (32), whereby the receiver array (29) has an imaging optical element (7) connected upline of it, and the storage unit contains a formation matrix, according to which the elements of the receiver array (29) are allocated to the four sub-regions in such a manner that two respective sub-regions have a local phase shift of 90° relative to one another and the signal lines of the elements belonging to a sub-region are directed via an analog adder respectively to one of the four outputs of the evaluation module (3).

9. Device according to Claim 8, characterised in that the receiver array (29) is constructed as a photodiode line or a phototransistor line.

10. Device according to Claim 8 or 9, characterised in that the storage unit (32) comprises a storage means (30) with a number of inputs corresponding to the number of line elements and a function unit (31) for conversion of the formation matrix.

11. Device according to Claim 8, characterised in that the receiver array is constructed as a CCD line (8), with a photosensitive part for recording image information and one or more shift registers for charge storage, whereby during a readout cycle a multiple-time electrical connection of a shift register cell exists with the elements of the photosensitive part.

12. Device according to Claim 8 or 11, characterised in that the storage unit comprises an addressable storage means (10) connected to the output of the CCD cell (8), said storage means having eight multi-channel outputs, to which analog adders (11) are respectively connected downline for integration via one of the sub-region halves, the outputs of which are connected in pairs across four differential amplifiers (12), to which a lowpass filter (13) of higher order is respectively connected downline so that the four outputs of the lowpass filters (13) correspond to the outputs of the evaluation module.

13. Device according to Claim 5 and 7, characterised in that the evaluation module has four radiating sources (15, 16, 17, 18), to which one respective beam formation optical element (19) is connected downline, coupling modules (20) being arranged in the beam path of one of the four radiating sources in such a way that the four individual beams are combined geometrically to form a bundle of beams (21), an optical module (22) being arranged in the beam path of the bundle of beams for spreading the beam, whereby a holographic grating (23) is connected downline of the optical module, followed by a phase module (24), which from the beam pairs respectively intersecting at the measurement location (25), forms two independent interference pattern pairs, and by a receiver module (28) comprising collecting optics (26) and receiver unit (27), and whereby an actuator unit (14) is electrically connected to the four radiating sources (15, 16, 17, 18) and the receiver unit (27).

## Revendications

1.  Procédé de mesure de la vitesse d'objets ou de surfaces d'objets en mouvement exploitant l'effet de filtre des réseaux optiques et utilisant des détecteurs optoélectroniques pour la transformation de l'énergie lumineuse en énergie électrique sous la forme d'un courant ou d'une tension, dans lequel la forme de signaux, la mesure de fréquence, la détermination de la vitesse ainsi que la comparaison des phases se succèdent en vue de reconnaître la direction du mouvement, à l'aide de structures de réseaux sous la forme d'un éclairage structuré dans la marche des rayons d'émission, sous la forme de réseaux d'interférence au point de mesure ou dans la marche des rayons de réception, ou sous la forme de réseaux de transmission ou de récepteurs structurés analogues à un réseau, caractérisé en ce que l'information d'image des objets ou des surfaces d'objets est traitée par le fait qu'une structure de réseau localement limitée effectue une évaluation, dans laquelle l'amplitude du réseau est transmise sous la forme d'une enveloppe de telle sorte qu'elle atteigne les bords du réseau symétriquement, l'information d'image étant traitée dans au moins quatre sous-domaines localement différents, deux sous-domaines formant à chaque fois une paire, lesquelles paires possèdent entre elles un décalage de phases local défini pouvant être choisi librement, de préférence inférieur à 90°, et les sous-domaines de chaque paire présentant entre eux un décalage de phases local de 90°, en ce que deux paires de signaux de départ à phase orthogonale entre elles sont formées par le biais de l'intégration au point défini, lesquels, lors de l'interprétation des signaux de chaque paire de signaux en tant que partie réelle ou imaginaire d'une grandeur complexe, produisent une paire d'indicateurs rotatifs, en ce qu'à la fois l'angle de phase entre les indicateurs rotatifs de chaque paire de signaux à des moments fixés d'échantillonnage successifs et l'angle de phase entre les indicateurs rotatifs actuels et les indicateurs rotatifs formés à un moment fixé d'échantillonnage antérieur des deux paires de signaux sont calculés, et en ce qu'en employant ces quatre angles de phase calculés, un angle de phase corrigé, et par conséquent une vitesse d'objet, sont déterminés.

2.  Procédé suivant la revendication 1 comprenant un éclairage homogène, caractérisé en ce que l'enveloppe de l'amplitude du réseau remplit une fonction de fenêtre, qui est déterminée par la répartition de l'intensité lumineuse de l'éclairage et/ou une évaluation électronique effectuée par un détecteur et/ou l'application d'une non-linéarité optique dans la marche des rayons de l'éclairage.

3.  Procédé suivant la revendication 1, caractérisé en ce que les résultats de l'évaluation sont intégrés sur la surface de la structure de réseau, laquelle intégration est effectuée par la formation immédiate de l'intégrale sur la surface de détection totale des quatre sous-domaines d'un détecteur ou par la connexion et l'addition immédiates des intégrales partielles sur les surfaces élémentaires des quatre sous-domaines ou par l'addition séquentielle des intégrales partielles sur les surfaces élémentaires des quatre sous-domaines.

4.  Procédé suivant la revendication 1, caractérisé en ce que les quatre sous-domaines sont emboîtés les uns dans les autres de telle sorte que deux sous-domaines possèdent toujours un décalage de phases local de 90° entre eux.

5.  Dispositif de mesure de la vitesse d'objets ou de surfaces d'objets en mouvement pour la mise en oeuvre du procédé suivant la revendication 1, comprenant un ou plusieurs réseaux dans la marche des rayons d'un détecteur optique (2), des composantes optiques pour la formation des rayons, ainsi qu'un ou plusieurs récepteurs et filtres passe-bas connectés en série, caractérisé en ce que le détecteur optique (2) est constitué d'un module d'évaluation (3), de deux modules à fonction d'indicateurs rotatifs (4), de deux modules à différence de phases (5) et d'un module de vitesse (6), dans lequel :

    -   l'information d'image des objets ou des surfaces d'objets est traitée dans le module d'évaluation (3) par le fait qu'une structure de réseau localement limitée effectue une évaluation, l'amplitude du réseau étant transmise sous la forme d'une enveloppe, de telle sorte qu'elle atteigne les bords du réseau symétriquement, l'information d'image étant traitée dans au moins quatre sous-domaines localement différents, et deux sous-domaines formant à chaque fois une paire, lesquelles paires possèdent entre elles un décalage de phases local défini pouvant être choisi librement, de préférence inférieur à 90°, les sous-domaines de chaque paire présentant chacun entre eux un décalage de phases local de 90°, et deux paires de signaux de départ à phase orthogonale entre elles sont formées par l'intégration par le point défini;

- dans les modules à fonction d'indicateurs rotatifs (4), les signaux de chaque paire de signaux de départ sont interprétés comme une partie réelle ou imaginaire d'une grandeur complexe et deux paires d'indicateurs rotatifs sont formés, et

- les sorties des modules à fonction d'indicateurs rotatifs (4) sont dirigées, toujours une fois directement et une fois par l'intermédiaire d'un module de différence de phases (5), pour le calcul des angles de phase entre les indicateurs rotatifs sur le module de vitesse (6) en vue du calcul d'un angle de phase corrigé, et par conséquent de la vitesse de l'objet.

6. Dispositif suivant la revendication 5 comprenant un réseau dans la marche des rayons, caractérisé en ce que le module d'évaluation (3) possède un seul réseau et un dispositif de réception, lequel réseau est constitué de quatre sous-domaines localement limités et lequel dispositif de réception dispose de quatre sorties, qui sont à chaque fois dirigées par paires vers l'un des modules à fonction d'indicateurs rotatifs (4).

7. Dispositif suivant la revendication 5 comprenant plusieurs réseaux dans la marche des rayons, caractérisé en ce que le module d'évaluation (3) possède plusieurs réseaux et un dispositif de réception, quatre réseaux au moins étant agencés dans quatre sous-domaines localement limités et deux sous-domaines possédant toujours entre eux un décalage de phases local de 90°, le dispositif de réception disposant de quatre sorties, qui sont à chaque fois dirigées par paires vers l'un des modules à fonction d'indicateurs rotatifs (4).

8. Dispositif suivant les revendications 5 et 6, caractérisé en ce que le module d'évaluation (3) comprend une combinaison de réseaux et du dispositif de réception qui se compose d'un agencement de récepteurs (29) et d'une unité de mémoire (32), un objectif (7) étant monté en amont de l'agencement de récepteurs (29) et l'unité de mémoire contenant une matrice de formage, suivant laquelle les éléments de l'agencement de récepteurs (29) sont attribués aux quatre sous-domaines de telle sorte que deux sous-domaines possèdent toujours entre eux un décalage de phases local de 90° et que les lignes de signaux des éléments correspondant à un sous-domaine soient dirigées à chaque fois vers l'une des quatre sorties du module d'évaluation (3) par l'intermédiaire d'un additionneur.

9. Dispositif suivant la revendication 8, caractérisé en ce que l'agencement de récepteurs (29) est réalisé sous la forme d'une ligne de photodiodes ou d'une ligne de phototransistors.

10. Dispositif suivant les revendications 8 et 9, caractérisé en ce que l'unité de mémoire (32) est constituée d'une mémoire (30) avec un nombre d'entrées correspondant au nombre des éléments de la ligne et d'une unité de fonction (31) pour la mise en oeuvre de la matrice de formage.

11. Dispositif suivant la revendication 8, caractérisé en ce que l'agencement de récepteurs est réalisé sous la forme de lignes d'éléments à couplage de charge (8), avec une partie photosensible pour la réception de l'information d'image et un ou plusieurs registres à décalage pour la mise en mémoire, dans lequel, pendant un cycle de lecture, il existe une connexion électrique multiple entre une cellule du registre à décalage et les éléments de la partie photosensible.

12. Dispositif suivant les revendications 8 et 11, caractérisé en ce que l'unité de mémoire est constituée d'une mémoire (10) pouvant être adressée et reliée à la sortie des lignes d'éléments à couplage de charge (8), laquelle mémoire dispose de huit sorties à canaux multiples, auxquelles l'additionneur (11) est toujours connecté en série pour l'intégration par l'une des moitiés des sous-domaines, dont les sorties sont dirigées par paires vers quatre amplificateurs différentiateurs (12), auxquels un passe-bas (13) de rang supérieur est à chaque fois connecté en série, de telle sorte que les quatre sorties des passe-bas (13) correspondent aux sorties du module d'évaluation (3).

13. Dispositif suivant les revendications 5 et 7, caractérisé en ce que le module d'évaluation possède quatre sources de rayonnement (15, 16, 17, 18), auxquelles un objectif de formation de rayons (19) est toujours connecté en série, des modules de couplage (20) étant disposés dans la marche des rayons d'une des quatre sources de rayonnement de telle sorte que les quatre rayonnements individuels soient réunis géométriquement en un faisceau de rayons (21), un module d'objectif (22) étant disposé dans la marche des rayons du faisceau de rayons en vue de l'élargissement du rayonnement, auquel module d'objectif un réseau holographique (23) est connecté en série, suivi d'un module de phase (24), lequel forme, à partir des paires de rayonnement qui se coupent toujours au point de mesure (25), deux paires indépendantes d'échantillons d'interférence, et suivi d'un module de réception (28), constitué d'un objectif collecteur (26) et d'une unité de réception (27), une unité de commande (14) étant connectée électriquement aux quatre sources de rayonnement (15, 16, 17, 18) et à l'unité de réception (27).

Fig. 1

a

b

c

d

n

n/2

n/4

Fig. 2

Fig. 3

Fig. 4

**Fig. 5**